# EUROPÄISCHE PATENTANMELDUNG

(11) **EP 0 573 686 A1**
(43) Veröffentlichungstag der Anmeldung: **15.12.1993**
(21) Anmeldenummer: 92109724.2
(22) Anmeldetag: 10.06.1992
(51) Int. Cl.: G06F 15/16, G06F 11/34, G06F 3/14

(54) **Verfahren zur Erfassung des Zustandes eines Rechnersystems**

(71) Anmelder: B.O.S. SOFTWARE GmbH, D-85540 Haar (DE)
(72) Erfinder: Fischer, Alois, W-8051 Oberhummel (DE); Moser, Georg, W-8000 München 5 (DE)
(74) Vertreter: Ritter und Edler von Fischern, Bernhard,Dipl.-Ing.

(57) **Zusammenfassung**

Für Rechnersysteme, die aus einer Zentralrechnereinheit und mehreren daran angeschlossenen Benutzerstationen bestehen, ist kennzeichnend, daß in der Zentralrechnereinheit nur sehr wenig Informationen über die Benutzerstationen vorliegen. Dies ist darauf zurückzuführen, daß die Anwendungsprogramme, die von einem Benutzer des Rechnersystems aufgerufen werden, in der Zentralrechnereinheit ablaufen und nur die Anzeige von Daten und deren Eingabe über die Benutzerstationen erfolgt. Insbesondere über den aktuellen Bildschirminhalt liegen aber in der Zentralrechnereinheit keine Informationen vor. Das erfindungsgemäße Verfahren beseitigt dieses Problem ohne zusätzlichen Aufwand bezüglich der Systemkomponenten und ohne große Belastung der Zentralrechnereinheit.

## Beschreibung

Die Erfindung betrifft ein Verfahren zur Erfassung des Zustandes eines Rechnersystems aus einer Zentralrechnereinheit und mehreren Benutzerstationen, die mit der Zentralrechnereinheit verbunden sind.

Für Rechnersysteme, die aus einer Zentralrechnereinheit und mehreren daran angeschlossenen Benutzerstationen bestehen, ist kennzeichnend, daß in der Zentralrechnereinheit nur sehr wenig Informationen über die Benutzerstationen vorliegen. Dies ist darauf zurückzuführen, daß die Anwendungsprogramme, die von einem Benutzer des Rechnersystems aufgerufen werden, in der Zentralrechnereinheit ablaufen und nur die Anzeige von Daten und deren Eingabe über die Benutzerstationen erfolgt. Insbesondere über den aktuellen Bildschirminhalt liegen aber in der Zentralrechnereinheit keine Informationen vor. Angesichts der großen Anzahl angeschlossener Benutzerstationen ist eine Verwaltung derartiger Informationen bei bekannten Rechnersystemen dieser Art nicht vorgesehen.

Der exakte Zustand des Rechnersystems ist durch die in der Zentralrechnereinheit vorliegenden Informationen nicht vollständig bestimmt. Das bedeutet eine Einschränkung der Möglichkeiten, Anwendungen beliebiger Art zu realisieren, für der genaue Zustand des Rechnersystems, insbesondere in der Beziehung zu einer der zahlreichen angeschlossenen Benutzerstationen von Bedeutung ist.

Die Übertragung von Strukturen aus dem Bereich der Computernetzwerke, bei denen mehrere selbstständig arbeitende Rechner mit eigener Anzeige- und Eingabeeinheit miteinander verbunden sind, ist bislang nicht in Erwägung gezogen worden, da der hierfür erforderliche Aufwand zu hoch ist. Denn entweder werden zusätzliche Systemkomponenten benötigt oder es wird die Belastung der der Zentralrechnereinheit durch die zusätzlich anfallenden Verwaltungsaufgaben gesteigert, was bei der großen Zahl von Benutzerstationen zu einer erheblichen Belastung führen kann.

Bislang war man daher gezwungen, alle Anwendungsprogramme so auszulegen, daß sie mit den vorhandenen Informationen über den Zustand des Rechnersystems auskamen.

Demgemäß besteht die Aufgabe der Erfindung in der Erfassung des Zustands eines Rechnersystems und der Bereitstellung von zustandsbeschreibenden Systeminformationen, die den Zustand des Rechnersystems wiedergeben, insbesondere zur Weitergabe an Anwendungsprogramme, ohne zusätzliche Komponenten in dem Rechnersystem oder eine stark erhöhte Belastung der Zentralrechnereinheit.

Gelöst wird diese Aufgabe durch ein Verfahren gemäß Patentanspruch 1.

Vorteilhafte Ausgestaltungen ergeben sich aus den Unteransprüchen.

Im wesentlichen richtet sich die Erfindung auf eine Änderung bzw. Beeinflussung der internen Arbeitsabläufe des Rechnersystems. Mit Hilfe der erfindungsgemäß ausgelösten Arbeitsabläufe innerhalb des Rechnersystems, insbesondere zwischen Zentralrechnereinheit und einer der Benutzerstationen, erfolgt die Erfassung des Zustandes des Rechnersystems und wird die Grundlage für die Gewinnung von Systeminformationen über den Zustand des Rechnersystems gelegt, die durch das weitere erfindungsgemäße Verfahren bestimmt und bereitgestellt werden.

Eine besondere Anwendungsmöglichkeit für das erfindungsgemäße Verfahren ergibt sich hinsichtlich des Inhalts der Anzeige der Benutzerstationen.

Die Erfindung wird im folgenden unter Bezugnahme auf die Zeichnungen näher erläutert.
- Fig.1: zeigt den Aufbau eines bekannten Rechnersystems, bei dem das erfindungsgemäße Verfahren Anwendung findet;
- Fig.2: zeigt ein Beispiel eines seriellen Datenformats;
- Fig.3: zeigt die Signale und deren zeitliches Auftreten innerhalb des Rechnersystems; und
- Fig.4: zeigt den Ablauf der Schritte des erfindungsgemäßen Verfahrens innerhalb des Rechnersystems.

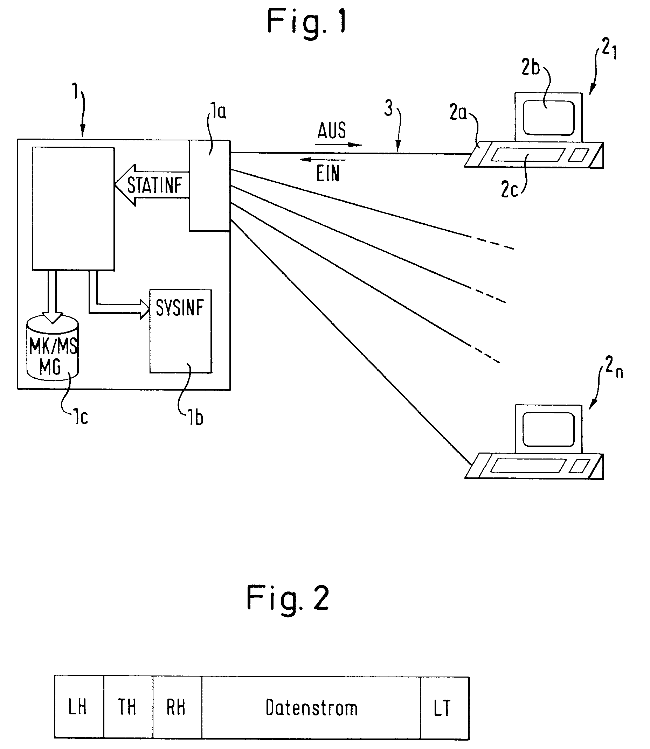

Fig.1 zeigt beispielhaft ein Rechnersystem, das aus einer Zentralrechnereinheit 1 und mehreren Benutzerstationen 2₁,...,2ₙ besteht. Die Benutzerstationen sind entfernt von der Zentralrechnereinheit aufgestellt und über jeweils eine serielle Schnittstelle 2a und eine Verbindungsleitung 3, die an eine entsprechende serielle Schnittstelle 1a in der Zentralrechnereinheit 1 angeschlossen ist, mit der Zentralrechnereinheit 1 verbunden. Jede Benutzerstation 2₁,...,2ₙ umfaßt eine Anzeigeeinheit 2b und eine Eingabeeinheit 2c.

Zwischen der Zentralrechnereinheit 1 und den Benutzerstationen 2₁,...,2ₙ werden über die Verbingungsleitungen 3 Datensignale in einem seriellen Format ausgetauscht, das beispielhaft in Fig.2 dargestellt ist. Man unterscheidet in diesem Zusammenhang aus der Sicht der Zentralrechnereinheit 1 eingehende (EIN) und ausgehende (AUS) Datensignale, die aber über dieselbe Verbindungsleitung übertragen werden. Zu den ausgetauschten Daten gehören neben den Daten des Programms, das vom Benutzer an der Benutzerstation aufgerufen wird, insbesondere auch Datensignale zur Steuerung der jeweiligen Benutzerstation und deren Anzeigeeinheit, sowie Daten, die von dem Benutzer über die Eingabeeinheit eingegeben werden.

Die Bereiche LH, TH und RH im Format der übertragenen Daten gemäß Fig.2 dienen zur Steuerung der Datenübertragung. Der Bereich LT kennzeichnet das Ende der Datenübertragung. Dazwischen liegt der Datenstrom, über den die eigentliche Übertragung von Informationen stattfindet.

Obwohl die Benutzerstationen 2₁,...,2ₙ entfernt von der Zentralrechnereinheit 1 aufgestellt sind, muß das Rechnersystem als eine Einheit betrachtet werden. Jede Benutzerstation arbeitet nur in einem geringen Maß unabhängig von der Zentralrechnereinheit; die Zentralrechnereinheit 1 übernimmt die Verwaltung z.B. der Benutzereingaben oder der dem Benutzer angezeigten Informationen vollständig. Darüberhinaus werden von den Zentraleinheit 1 Systeminformationen verwaltetet und interne Steuerungsabläufe veranlaßt und überwacht.

Um die Belastung der Zentralrechnereinheit 1 durch Verwaltungsaufgaben, die die einzelnen Benutzerstationen 2₁,...,2ₙ betreffen, so gering wie möglich zu halten, werden die Systeminformationen, die den Zustand des Rechnersystems in Bezug auf die Benutzerstationen wiedergeben, innerhalb der Zentralrechnereinheit soweit wie möglich reduziert. Aufgrund der teilweise sehr großen Anzahl angeschlossener Benutzerstationen ist eine Speicherung und/oder Verwaltung einer großen Datenmenge für jede einzelne Benutzerstation nicht sinnvoll durchführbar. Der gesamte Aufbau des Rechnersystems und die internen Arbeitsabläufe sind daher darauf ausgelegt, mit den vorhandenen Systeminformationen bezüglich der Benutzerstationen auszukommen.

Zur Erläuterung der Erfindung werden im folgenden die Arbeitsabläufe in dem Rechnersystem nur in Bezug auf die Benutzerstation 2₁ beschrieben, ohne daß dadurch aber eine Beschränkung dieser Arbeitsabläufe auf nur eine oder die erste Benutzerstation erfolgen soll.

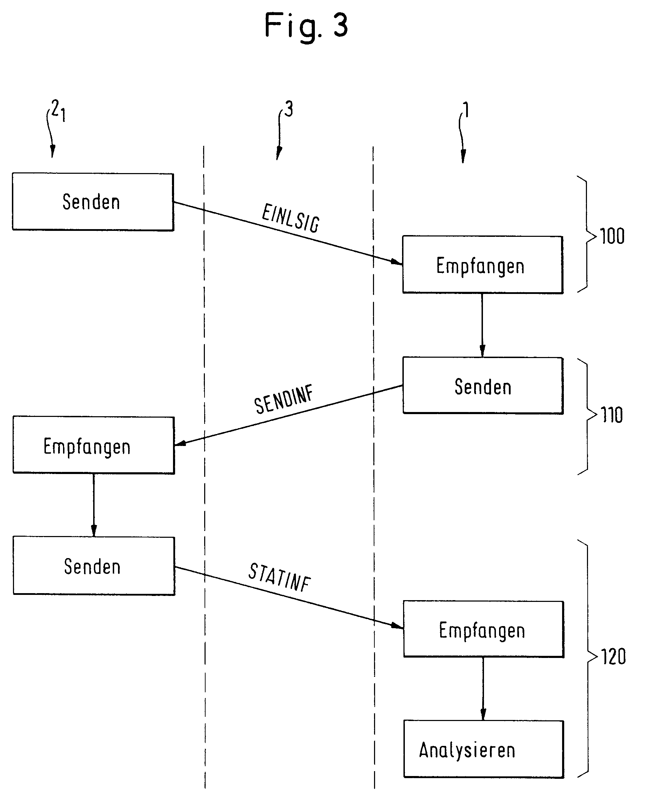

Gemäß der Erfindung wird, wie in Schritt 100 in Fig.3 gezeigt ist, das erfindungsgemäße Verfahren eingeleitet, wenn über die serielle Verbindungsleitung ein Einleitungssignal EINLSIG von der Benutzerstation 2₁ an die Zentralrechnereinheit 1 übertragen wird. Das Einleitungssignal EINLSIG wird erzeugt, wenn der Benutzer an der Benutzerstation 2₁ eine bestimmte Taste oder Tastenkombination in der Eingabeeinheit 2c betätigt, die systemweit diesem Zweck vorbehalten ist. Nachdem die Zentralrechnereinheit 1 das Einleitungssignal EINLSIG empfangen hat, wird gemäß Schritt 110 durch die Zentralrechnereinheit 1 ein Informationssendesignal SENDINF an die Benutzerstation 2₁ übertragen, von der das Einleitungssignal EINLSIG empfangen wurde. Die Benutzerstation 2₁ überträgt daraufhin die sie betreffenden und von der Zentralrechnereinheit abgefragten Stationsinformationen STATINF gemäß Schritt 120 an die Zentralrechnereinheit 1 in dem bereits erwähnten seriellen Format über die Verbindungsleitung 3. Diese Stationsinformationen sind speziell auf die Benutzerstation 2₁ bezogen, von der zu Beginn das Einleitungssignal EINLSIG ausging.

Die Übertragung der Stationsinformationen STATINF benötigt nur eine kuze Zeit, so daß die Belastung der Zentralrechnereinheit 1 gering ist und rasch die weitere Bearbeitung wieder aufgenommen werden kann. Ferner ist zu beachten, daß die Übertragung der Informationen auf nur eine der zahlreichen Benutzerstationen beschränkt ist, also eine überflüssige Übertragung von Stationsinformationen anderer Benutzerstationen vermieden wird.

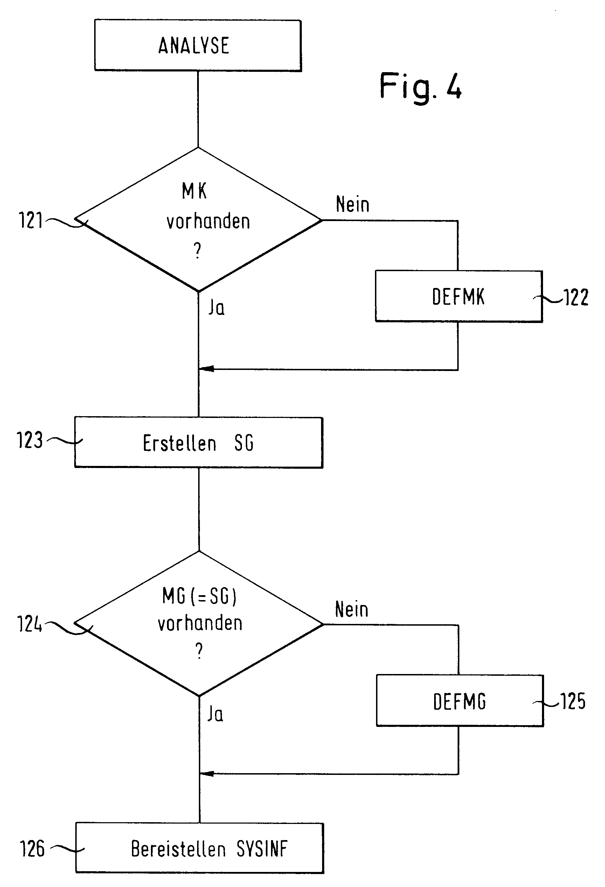

Wie in Fig.4 dargestellt, werden die eingehenden Datensignale STATINF von der Zentralrechnereinheit 1 analysiert und gemäß Schritt 121 auf das Auftreten bestimmter Signalmuster einer Musterkategorie MK, die z.B. in Bezug auf die in der Anzeigeeinheit 2b der Benutzerstation 2₁ dargestellten Inhalte vorgegeben ist, untersucht. Der spezielle Fall der Anzeigeinhalte wird weiter unten beispielhaft noch näher erläutert. Jede Musterkategorie MK ist mit einem Musterschlüssel MS verknüpft, der eine weitere Untersuchung der Datensignale erlaubt, indem er den Weg zur Erstellung einer Signalgruppe SG aus den Datensignalen STATINF vorgibt.

Kann in den eingehenden Datensignalen STATINF kein Signalmuster SM einer vorgegebenen Musterkategorie MK zugeorndet werden, obwohl in dem Datensignal STATINF bestimmte eine Musterkategorie charakterisierende Bestandteile enthalten sind, führt die Zentralrechnereinheit 1 einen ersten Definitionsarbeitsablauf DEFMK gemäß Schritt 122 aus, durch den eine neue Musterkategorie definiert, mit einem Musterschlüssel verknüpft und für die später folgenden Analysen der eingehenden Datensignale bereitgestellt wird.

Andernfalls, d.h. wenn eine Musterkategorie MK von der Zentralrechnereinheit 1 in den Datensignalen STATINF erkannt wurde, führt die Zentralrechnereinheit 1, wie in Schritt 123 gezeigt, entsprechend der Vorgabe des Musterschlüssels MS eine Bearbeitung der Datensignale STATINF aus, um eine Signalgruppe SG aus den Datensignalen für die weitere Untersuchung herauszulösen. Danach überprüft die Zentralrechnereinheit 1, ob die Signalgruppe SG einer vorgegebenen Mustergruppe MG zugeordnet werden kann, wie in Schritt 124 dargestellt ist. Diese Untersuchung findet auch statt, wenn die Zentralrechnereinheit 1 im Schritt 121 keine Musterkategorie MK unmittelbar zugeordnet hat, sondern der erste Definitionsarbeitsablauf DEFMK ausgeführt wurde.

Konnte die Signalgruppe SG keiner vorgegebenen Mustergruppe MG zugeorndet werden, führt die Zentralrechnereinheit 1 einen zweiten Definitionsarbeitsablauf DEFMG gemäß Schritt 125 aus, durch den eine neue Mustergruppe definiert und für die später folgenden Analysen der eingehenden Datensignale bereitgestellt wird. Als Grundlage dient der Musterschlüssel MS der bereits vorgegeben ist oder im ersten Definitionsarbeitsablauf DEFMK erstellt wurde.

Hat die Zentralrechnereinheit 1 eine Signalgruppe SG einer bestimmten Mustergruppe MG zuordnen können, steht die Zustandsbeschreibende Systeminformation SYSINF zur Verfügung und wird von der Zentralrechnereinheit 1 gemäß Schritt 125 bereitgestellt, wodurch der erfindungsgemäße interne Arbeitsablauf in der Zentralrechnereinheit 1 im wesentlichen abgeschlossen ist. Denn durch die Zuordnung einer Signalgruppe, die aus den eingehenden Datensignalen STATINFO mit Hilfe des Musterschlüssels MS generiert wurde, zu einer vorgegebenen Mustergruppe MG liegt eine Systeminformation vor, die den Zustand des Rechnersystems bezüglich der Benutzerstation, von der das Einleitungssignal EINLSIG ausging, eindeutig beschreibt.

Die Systeminformation SYSINF kann von Programmen, die von der Zentralrechnereinheit 1 abgearbeitet werden, abgerufen und zur Steuerung des Programmablaufs genutzt werden. Aber auch die Zentralrechnereinheit 1 kann nach der Analyse des benutzerstationbezogenen Zustandes des Rechnersystems, dessen Kernbestandteil sie selbst ist, weitere interne Arbeitsabläufe ausführen, die von der Systeminformation SYSINF abhängen.

Vorzugsweise wird die Systeminformation SYSINF, wie in Fig. 1 angedeutet ist, in einem vorgegebenen Bereich eines Speicher 1b in der Zentralrechnereinheit 1 abgelegt. Ferner werden vorzugsweise die Musterkategorien MK, Musterschlüssel MS und Mustergruppen MG in einem bestimmten Bereich auf einem Festplattenspeicher 1c der Zentralrechnereinheit 1 abgespeichert. Auf diese Weise wird der Vorteil erzielt, daß für die Bereitstellung der Systeminformation nur wenig Speicher 1b erforderlich ist, während die Speicherung der Musterkategorien MK, Musterschlüssel MS und Mustergruppen MG nahezu keiner Beschränkung unterliegt. Ferner kann dadurch eine bestimmte Anzahl von Musterkategorien MK und Mustergruppen MG vorgegeben werden, so daß in vielen Fällen die Definitionsarbeitsabläufe DEFMK und DEFMG entfallen.

Auf diese Weise wird durch das erfindungsgemäße Verfahren eine Möglichkeit geschaffen, durch Arbeitsabläufe, die intern im Rechnersystem der oben beschriebenen Art ablaufen, eine Bereitstellung von Systeminformationen zu erreichen, die bislang nicht verfügbar waren. Durch die Analyse der von einer Benutzerstation eingehenden Datensignale bezüglich einer Musterkategorie, die Erstellung einer Signalgruppe mittels des Musterschlüssels und die Überprüfung bezüglich einer Mustergruppe wird der Zustand des Rechnersystems mit möglichst geringem Aufwand bezogen auf die Zentralrechnereinheit ermittelt. Die Übertragung der Datensignale erfolgt über die vorhandenen Verbindungsleitungen, so daß keine zusätzlichen Verbindungen bereitgestellt werden müssen. Ferner beschränkt sich der Aufwand auf die Benutzerstation, von der das Einleitungssignal übertragen worden ist und schließlich ist die bereitgestellte Systeminformation auf ein Mindestmaß reduziert, da nur exakt die Information aufgrund der eingehenden Datensignale von der Zentralrechnereinheit generiert wird, die für die Beschreibung des Zustandes des Rechnersystems erforderlich ist.

In einigen bekannten Rechnersystemen der oben beschriebenen Art sind Möglichkeiten gegeben, die Übermittlung von Datensignalen von einer Benutzerstation auszulösen, die dann über die serielle Verbindung zu der Zentralrechnereinheit übertragen werden. Diese Möglichkeiten sind vorteilhaft bei dem erfindungsgemäßen Verfahren nutzbar.

Im folgenden wird das erfindungsgemäße Verfahren im Hinblick auf die Bereitstellung einer Systeminformation beschrieben, die den Zustand des Rechnersystems bezüglich der auf der Anzeigeeinheit der Benutzerstation dargestellten Maske widerspiegelt. Der Begriff der Maske ist aus dem Bereich der Anwendungsprogrammierung von Rechnersystemen bekannt und beschreibt eine im wesentlichen formularartige Darstellung von Feldern und deren Bezeichnungen, durch die dem Benutzer die Möglichkeit geboten wird, bestimmte Eingaben vorzunehmen, die von dem Anwendungsprogramm weiterverarbeitet werden. Wie bereits eingangs erläutert, liegt aber in der Zentralrechnereinheit 1 keine Systeminformation vor, die es erlaubt, die jeweils auf der Anzeigeeinheit einer Benutzerstation vorhandene Anzeige zu bestimmen. Diese Situation eignet sich in besonderem Maße zur Anwendung der erfindungsgemäßen Verfahrens.

Entsprechend dem erfindungsgemäßen Verfahren wird die Übermittlung der Anzeigeinhalte, etwa durch einen Bildschirmpufferlesebefehl (READ BUFFER) bewirkt, nachdem von der so angesprochenen Benutzerstation ein Einleitungssignal empfangen wurde. Das Einleitungssignal wird z.B. durch Betätigen einer bestimmten Taste oder Tastenkombination erzeugt und an die Zentralrechnereinheit übertragen. Die Taste bzw. Tastenkombination muß systemweit für das Auslösen der Übertragung des Einleitungssignals zur Verfügung stehen.

Die auf den Bildschirmpufferlesebefehl hin übertragenen Datensignale werden auf das Auftreten bestimmter Signalmuster, die für eine Kategorie von Masken charakteristisch sind, untersucht. Die Definition der Maskenkategorien umfaßt konstante Informationen, die bei allen Anwendungsmasken an der gleichen Stelle am Bildschirm vorkommen und deren Inhalt überall identisch ist, und variable Informationen, die bei allen Anwendungsmasken an der gleichen Stelle, aber mit unterschiedlichen Inhalt, vorkommen. Der konstante Teil der Definition der Maskenkategorie kann als Maskenschablone und der variable Teil als Maskenschlüssel bezeichnet werden, was zu einer Art Feinunterteilung der Maskenkategorie führt.

Die Maskenschablone dient zur Erkennung einer bestimmten Maskenkategorie, deren Masken Gemeinsamkeiten bezüglich ihres konstanten Informationsteils aufweisen. Z.B. können alle Masken eines Anwendungsprogramms an einer feststehenden Stelle des Bildschirms eine immer vorhandene Kennung enthalten, die die Identifikation der Maske ermöglicht. Zur Erkennung werden Attributpositionen und/oder Textkonstanten herangezogen, wobei die Attributpostionen hinsichtlich der Zeile und Spalte ihres Auftretens auf dem Bildschirm, die Textkonstanten darüberhinaus auch hinsichtlich ihrer Länge und ihres Inhalts erfaßt werden. Für die Erkennung mittels einer Maskenschablone sind nur einige wenige Attributpositionen und Textkonstanten vorzugehen. In einer besonderen Gestaltung kann die Erstellung der Vorgaben interaktiv, d.h. unter Kontrolle des Benutzers erfolgen. Dieser Vorgang ist nur einmal auszuführen, da anschließend die Maskenschablone abgespeichert wird.

Nachdem über die Maskenschablone eine bestimmte Maskenkategorie erkannt wurde, wird mit Hilfe des Maskenschlüssels die einzelne Maske identifiziert. Dazu wird dem Maskenschlüssel entsprechend ein Maskennamen generiert, dessen Bestandteile und deren Reihenfolge sich nach dem Maskenschlüssel richtet. Der Maskenschlüssel gibt vor wie die Zentralrechnereinheit bestimmte Signalbestandteile der Datensignale zusammenfügt, um einen Maskennamen für die weitere Untersuchung zu erzeugen. Der Maskenschlüssel kann aus sogenannten MAP-Daten, aus Textkonstanten und dem Bildschirmmodell zusammengesetzt werden. Alle Angaben dienen dazu ein sequentielles Zusammenfügen des Maskennamens zu ermöglichen.

Durch die Erstellung des Maskennamens aufgrund des Maskenschlüssels kann die abschließende Untersuchung durch die Zentralrechnereinheit durchgeführt werden; danach steht eine Systeminformation bereit, die eine eindeutige Aussage über den momentane Anzeigeinhalt, d.h. über die momentan angezeigte Maske darstellt. Diese Systeminformation kann von Anwendungsprogrammen z.B. zur Anzeige von Hilfsinformationen auf der Anzeigeeinheit der Benutzerstation verwendet werden.

## Patentansprüche

1. Verfahren zur Erfassung des Zustandes eines Rechnersystems bestehend aus einer Zentralrechnereinheit (1) und mehreren Benutzerstationen (2₁,...,2ₙ), die mit der Zentralrechnereinheit verbunden sind, mit folgenden Schritten:
- Empfangen eines Einleitungssignals (EINLSIG) von einer der Benutzerstation (2₁,...,2ₙ) durch die Zentralrechnereinheit (1);
- Senden eines Informationssendesignals (SENDINF) von der Zentralrechnereinheit (1) an die Benutzerstation, von der das Einleitungssignal (EINLSIG) empfangen wurde;
- Empfangen von Datensignalen über Stationsinformationen (STATINF) von der Benutzerstation;
- Analysieren der eingehenden Datensignale der Stationsinformationen (STATINF) durch die Zentralrechnereinheit (1); und
- Bereitstellen einer Systeminformation (SYSINF) durch die Zentralrechnereinheit (1) aufgrund der Analyse der Stationsinformationen (STATINF).

2. Verfahren nach Anspruch 1, bei dem der Schritt des Analysierens der eingehenden Datensignale der Stationsinformationen (STATINF) durch die Zentralrechnereinheit (1) die folgenden Schritte umfaßt:
- Untersuchen der eingehenden Datensignale der Stationsinformationen (STATINF) auf das Auftreten eines Signalmusters einer bestimmten Musterkategorie (MK) hin und Ermitteln der Musterkategorie (MK);
- Erstellen einer Signalgruppe (SG) aus den eingehenden Datensignalen auf der Grundlage eines mit der ermittelten Musterkategorie verknüpften Musterschlüssels (MS); und
- Zuordnender Signalgruppe (SG) zu einer vorgegebenen Mustergruppe (MG).

3. Verfahren nach Anspruch 2, dadurch gekennzeichnet, daß die Bereitstellung der Systeminformation (SYSINF) durch Abspeicherung in einem bestimmten Bereich eines Speichers (1b) der Zentralrechnereinheit erfolgt.

4. Verfahren nach Anspruch 1, 2 oder 3, dadurch gekennzeichnet, daß die Stationsinformationen (STATINF) den Inhalt einer Anzeigeeinheit (2b) der Benutzerstation umfassen und die bereitgestellte Systeminformation (SYSINF) den Inhalt der Anzeige eindeutig wiedergibt.
